# EUROPEAN PATENT APPLICATION

(11) **EP 1 818 793 A1**
(43) Date of publication of application: **15.08.2007**
(21) Application number: 06005718.9
(22) Date of filing: 21.03.2006
(51) Int. Cl.: G06F 3/06, G06F 21/00, G06F 9/445, G06F 13/10

(54) **USB storage system and control method thereof**

(30) Priority: 14.02.2006 CN 200695104894
(71) Applicant: Harmony Microelectronic Inc., Taipei 114 (TW)
(72) Inventor: Yang, Chang-Wei No. 818, Chenggond Road, Changhua Country 514 Taiwan (CN); Lan, Kuo-Neng, Sindian City Taipei Country 231 Taiwan (CN)
(74) Representative: Negrini, Elena

(57) **Abstract**

A USB storage system is adapted to store data and exchange the stored data with an electronic apparatus via a universal serial bus (USB), and includes a memory having a control file folder containing at least one control file pre-stored thereon, the control file having a command data pre-stored therein corresponding to a control command of the storage system; and a controller for controlling data transmission between the memory and the USB. When the electronic apparatus accesses the control file via the USB, the controller executes a control command corresponding to the accessed control file according to the pre-stored command data. A method of controlling the storage system via the USB of the electronic apparatus is also provided to permit a user without the authority of an administrator to give a vendor command to the storage system, so that the functions of an access device can be conveniently utilized.

## Description

### FIELD OF THE INVENTION

The present invention relates to a USB storage system and control method thereof, and more particularly to a storage system and control method thereof permitting a non-administrator user to give a vendor command to the storage system.

### BACKGROUND OF THE INVENTION

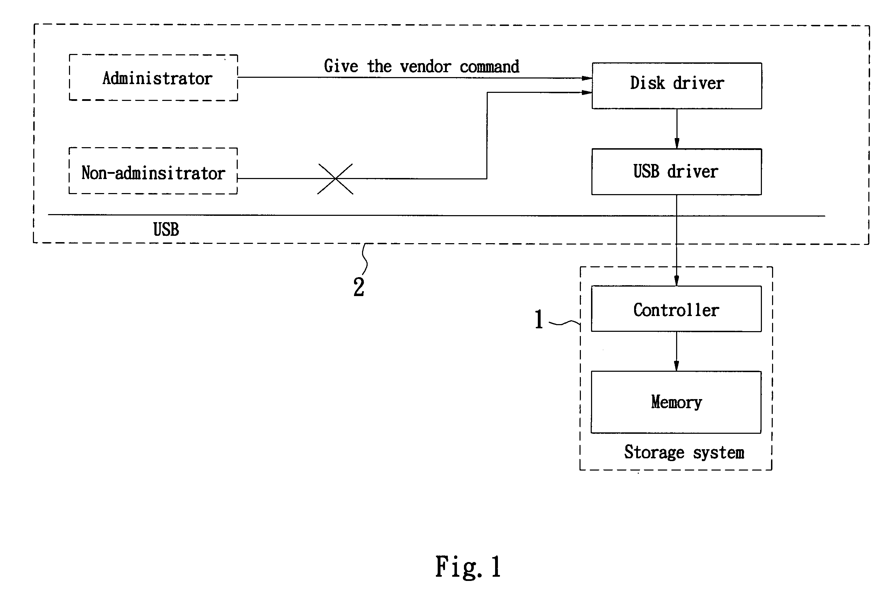

The currently available Microsoft® Windows does not permit a use identified as a non-administrator to give a vendor command to a universal serial bus (USB) mass storage device. Generally speaking, only a user identified as an administrator has the authority of giving a vendor command to a USB device for a controller thereof to execute the command. Under Microsoft® Windows, a user identified as an administrator is normally permitted to give a vendor command. The vendor command is transmitted through the following procedures: an administrator gives the command to a disk driver by way of SCIS Pass Through, and a USB driver sends the vendor command to the controller in the storage system, so that the task requested by the vendor command is executed. However, a user identified as a non-administrator has not the authority of giving a vendor command to the disk driver. Fig. 1 is a block diagram showing the control of giving a vendor command to a USB storage system in the prior art. As shown, an administrator is permitted to directly give a vendor command to the disk driver, so that the USB driver drives the storage system. That is, the USB drivers exchanges data with the controller of the storage system via a USB, so as to achieve the function of storing or reading data on or from a memory of the storage system. However, a non-administrator user is not permitted to directly give the vendor command to the disk driver.

Currently, USB storage systems with diversified functions are constantly developed and introduced into the market. When the non-administrator users do not have the authority of controlling the storage system from a computer, there would be a lot of restrictions and difficulties in performing different functions, and many special functions could not executed on the computer by the non-administrator users.

### SUMMARY OF THE INVENTION

A primary object of the present invention is to provide a USB storage system and control method thereof, in which the USB storage system can store data and exchange the stored data with an electronic apparatus via a universal serial bus (USB), and permits a non-administrator user to give a vendor command to the storage system.

To achieve the above and other objects, the storage system according to the present invention includes a memory having a control file folder containing at least one control file pre-stored thereon, the control file having a command data pre-stored therein corresponding to a control command of the storage system; and a controller for controlling data transmission between the memory and the USB. When the electronic apparatus accesses the control file via the USB, the controller executes a control command corresponding to the accessed control file according to the pre-stored command data.

A method of controlling the storage system via USB of an electronic apparatus according to the present invention includes the steps of pre-storing a control file folder containing at least one control file on a memory of the storage system, the control file having a command data pre-stored therein corresponding to a control command of the storage system; and accessing one of said at least one control file via a USB of the electronic apparatus, so that a controller of the storage system is caused to execute a control command corresponding to the accessed control file according to the pre-stored command data.

In this manner, a user without the authority of an administrator is permitted to give a vendor command to the storage system, enabling the functions of an access device to be conveniently utilized.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram showing the control of giving a vendor command to a USB storage system in the prior art; and
Fig 2 is a block diagram showing the control of giving a vendor command to a USB storage system according to the present invention.

### DETAILED DESCRIPTION OF THE PREFERRED EMBODIMENTS

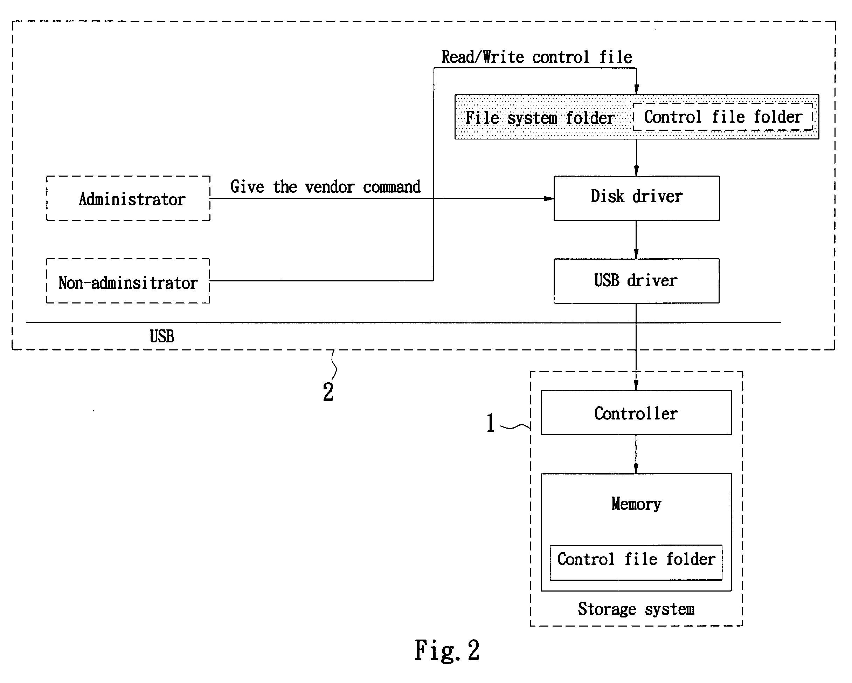

Please refer to Fig. 2 that is a block diagram showing the control of giving a vendor command to a USB storage system according to the present invention. As shown, a storage system 1 is adapted to store data, and to exchange data with an electronic apparatus, such as a computer 2, via a universal serial bus (USB). The storage system 1 includes a memory, which may be, for example, a flash memory, and has a control file folder containing at least one control file stored thereon, and the control file has a command data pre-stored therein corresponding to a control command of the storage system; and a controller for controlling the data transmission between the memory and the USB.

As shown in Fig. 2, the computer 2 is connected to the storage system 1 of the present invention via the USB. In a file system folder of the computer 2, a control file folder mapping is formed corresponding to the control file folder in the storage system 1. Under the Microsoft® Windows, a user identified as an administrator has the authority of giving a vendor command. The vendor command is transmitted through the following procedures: an administrator gives the command to a disk driver by way of SCIS Pass Through, and a USB driver sends the vendor command to the controller in the storage system 1, so that the task requested by the vendor command is executed. Therefore, an administrator is permitted to directly give a vendor command to the disk driver for the USB driver to drive the storage system 1. That is, the computer 2 exchanges data with the controller of the storage system 1 via the USB, so as to achieve the function of storing or reading data on or from the memory of the storage system 1. On the other hand, in a non-administrator mode, a user may read/write the control file via the control file folder mapping in the file system folder of the computer 2, so that the computer 2 accesses the control file of the storage system 1 via the USB. At this point, the controller would execute the control command corresponding to the accessed control file in accordance with the pre-stored command data.

The control file folder of the storage system 1 is a special file system folder containing the correspondence relation between the vendor command and the file usable in the USB device. When a user identified as a non-administrator intends to give a relevant vendor command from the host of the computer 2, the user may first read/write the control file corresponding to that vendor command. The read/write request is directly transmitted to the controller of the storage system 1, so that the controller executes the action requested by the command.

In the above-described method of controlling the storage system 1 via the USB of the electronic apparatus 2 according to the present invention, for example, when the computer 2 is operating in a non-administrator mode and a user intends to obtain an Inquiry string of a USB mass storage device through the above procedures, with the control file folder mapping in the file system folder of the computer 2, it is able to know from the formatted storage system 1 the file corresponding to the Inquiry command is Inquiry.dat, and the address of the file is 0x00FF. When the user wants to know the Inquiry value through the procedures, he may read the file Inquiry.dat, and the operating system would converts the request for reading the file into a Read10 command with an address of 0x00FF, and transmits the command to the storage system 1. When the storage system 1 receives the Read10 request at 0x00FF, it knows the command requests for the Inquiry string value, and therefore sends back the Inquiry string. When the procedures receive the value sent back, the Inquiry sting in the storage system 1 is received. Therefore, by reading the control file corresponding to the control command via the control file folder, a user identified as a non-administrator may directly tell the storage system 1 for the controller thereof to execute the desired control operation.

## Claims

1. A storage system adapted to store data and exchange data with an electronic apparatus via a universal series bus (USB), comprising:
a memory having a control file folder containing at least one control file pre-stored thereon, said control file having a command data pre-stored therein corresponding to a control command of said storage system; and
a controller for controlling data transmission between said memory and said USB; and
wherein when said electronic apparatus accesses said control file via said USB, said controller executes a control command corresponding to said accessed control file according to the pre-stored command data.

2. The storage system as claimed in claim 1, wherein said control command is a vendor command of said storage system.

3. A method of controlling a storage system via a USB of an electronic apparatus, comprising the steps of:
pre-storing a control file folder containing at least one control file on a memory of said storage system; said control file having a command data pre-stored therein corresponding to a control command of said storage system; and
accessing one of said at least one control file via a USB of said electronic apparatus, so that a controller of said storage system is caused to execute a control command corresponding to said accessed control file according to said pre-stored command data.

4. The method of controlling a storage system via a USB of an electronic apparatus as claimed in claim 3, wherein said control command is a vendor command of said storage system.
